# EUROPEAN PATENT SPECIFICATION

(11) **EP 2 132 560 B1**
(45) Date of publication and mention of the grant of the patent: **27.11.2013**
(21) Application number: 07855329.4
(22) Date of filing: 21.12.2007
(51) Int. Cl.: G01N 29/22, G01N 29/24, G01N 29/265

(54) **Articulated robot for laser ultrasonic inspection**
Gelenkarmroboter zur Laser-Ultraschall-inspektion
Robot articulé pour l'inspection ultrasonore à laser

(30) Priority: 21.02.2007 US 709342
(43) Date of publication of application: 16.12.2009
(73) Proprietor: Lockheed Martin Corporation, Bethesda, Maryland 20817 (US)
(72) Inventor: DUBOIS, Marc, Keller, Texas 76248 (US); DRAKE, Thomas, E., Jr., Fort Worth, Texas 76110 (US); OSTERKAMP, Mark, Weatherford, Texas 76087 (US)
(74) Representative: Sessford, Russell
(86) International application number: PCT/US2007/088642
(87) International publication number: WO 2008/103209

(56) References cited:
- WO-A-00/00783
- WO-A-02/06848
- WO-A-02/18958
- US-A1- 2004 154 402
- US-A1- 2005 120 803
- US-B1- 6 795 198

## Description

### RELATED APPLICATIONS

This application claims priority to U.S. Provisional Application No. 60/871,680 filed on 22 December 2006 entitled "ARTICULATED ROBOT FOR LASER ULTRASONIC INSPECTION" to Thomas E. Drake.

This application references U.S. Provisional Application No. 60/091,240 filed on 30 June 1998.

This application references U.S. Provisional Application No. 60/091,229 filed on 30 June 1998 entitled "METHOD AND APPARATUS FOR DETECTING ULTRASONIC SURFACE DISPLACEMENTS USING POST-COLLECTION OPTICAL AMPLIFICATION" to Thomas E. Drake.

This application references U.S. Patent Application No. 10/753,208 filed on 07 January 2004 and entitled "REMOTE LASER BEAM DELIVERY SYSTEM AND METHOD FOR USE WITH A ROBOTIC POSITIONING SYSTEM FOR ULTRASONIC TESTING PURPOSES" to Thomas E. Drake.

This application references U.S. Patent Application No. 10/634,342 filed on 12 February 2004 and entitled "METHOD AND APPARATUS FOR ULTRASONIC LASER TESTING" to Thomas E. Drake.

This application references U.S. Patent Application No. 11/458,377, entitled "FIBER LASER FOR ULTRASONIC TESTING." filed on July 18, 2006 for all purposes.

This application references U.S. Patent Application No. NN/NNN, NNN, entitled "Fiber-Based Mid-Infrared Generation Laser for Laser Ultrasound Inspection" filed on MMM DD, 2006 for all purposes.

This application references U.S. Patent No. 6,176,135 issued January 23, 2001 and entitled "SYSTEM AND METHOD FOR LASER ULTRASONIC FREQUENCY CONTROL USING OPTIMAL WAVELENGTH TUNING."

This application references U.S. Patent No. 6,335,943 issued January 1, 2002 and entitled "SYSTEM. AND METHOD FOR ULTRASONIC LASER TESTING USING A LASER SOURCE TO GENERATE ULTRASOUND HAVING A TUNABLE WAVELENGTH."

### TECHNICAL FIELD OF THE INVENTION

The present invention relates generally to non-destructive evaluation (NDE), and more particularly, to the performance of laser ultrasonic NDE of materials from a robotic platform.

### BACKGROUND OF THE INVENTION

In recent years, the use of advanced composite structures has experienced tremendous growth in the aerospace, automotive, and many other commercial industries. While composite materials offer significant improvements in performance, they require strict quality control procedures in both the manufacturing processes and after the materials are in service in finished products. Specifically, non-destructive evaluation (NDE) methods must assess the structural integrity of composite materials. This assessment detects inclusions, delaminations and porosities. Conventional NDE methods are slow, labor-intensive, and costly. As a result, testing procedures adversely increase the manufacturing costs associated with composite structures.

Various methods and apparatuses have been proposed to assess the structural integrity of composite structures. One solution uses an ultrasonic source to generate ultrasonic surface displacements in a work piece which are then measured and analyzed. Often, the external source of ultrasound is a pulsed generation laser beam directed at the target. Laser light from a separate detection laser is scattered by ultrasonic surface displacements at the work piece. Then collection optics collect the scattered laser energy. The collection optics are coupled to an interferometer or other device, and data about the structural integrity of the composite structure can be obtained through analysis of the scattered laser energy. Laser ultrasound has been shown to be very effective for the inspection of parts during the manufacturing process.

However, the equipment used for laser ultrasound is custom-designed and is presently a limiting factor regarding inspection speed. Previous generation lasers used were either flash-lamp pumped rod architectures, diode-pumped slab configurations, or gas lasers.

It is important to note that all of the various ultrasound generation laser architectures described here are by their nature large and heavy. Therefore, these architectures are unsuited to use in portable laser ultrasound inspection systems for any sort of in-service, remote, or in-the-tield deployment. In addition, because they are so large and heavy, these architectures require substantial robotic fixturing and complex beam delivery systems even when they are deployed in factory environments, all of which greatly increases the initial overall cost of the laser ultrasound inspection system as well as the maintenance costs to keep the inspection system in operation in a production environment. These large complex structures are suited to external component inspections and cannot inspect all facets of assembled structures.
US2004154402 discloses an ultrasonic testing system for testing a manufactured part for various physical attributes, including specific flaws, defects, or composition of materials. An energy generator illuminates the part with energy and the part emanates energy from that illumination. Based on the emanations from the part, the system can determined precisely where the part is in free space. The energy illumination device and the receptor have a predetermined relationship in free space. This means the location of the illumination mechanism and the reception mechanism is known. Additionally, the coordinates of the actual testing device also have a predetermined relationship to the illumination device, the reception device, or both.
WO0000783 discloses a system for detesting ultrasonic displacements which includes a detection laser to generate a first pulsed laser beam to generate the ultrasonic surface displacement on a surface of the target A second pulsed laser beam is disclosed to detect the ultrasonic surface displacement on a surface of the target Collection optics are disclosed to collect phase modulated light from the first pulsed laser beam either reflected or scattered by the target. An interferometer is disclosed which processes the phase modulated light and generate at least one output signal. A processor is disclosed that processes the at least one output signal to obtain data representative of the ultrasonic surface displacements at the target.

### SUMMARY OF THE INVENTION

Embodiments of the present invention are directed to a system that substantially address the above identified needs and other needs as well. The embodiments of the present invention are further described in the following description and claims. Advantages and features of embodiments of the present invention may become apparent from the description, accompanying drawings and claims..

Embodiments of the present invention provide an ultrasonic non-destructive evaluation (NDE) system operable to inspect target materials. This ultrasonic NDE system includes an articulated robot, an ultrasound inspection head, a processing module, and a control module. The ultrasound inspection head couples to or mounts on the articulated robot. The ultrasound inspection head is operable to deliver a generation laser beam, a detection laser beam, and collect phase modulated light scattered by the target materials. The processing module processes the phase modulated light and produces information about the internal structure of the target materials. The control module directs the articulated robot to position the ultrasound inspection head according to a determined scan plan.

Laser ultrasonic inspection has been demonstrated as a cost-effective tool for the inspection of polymer-matrix composites. As the use of composites increases in different industries and in more complex structures, the present invention provides the ability for in-service inspection of integrated components. The embodiments of the present invention place a laser ultrasonic sensor or ultrasonic inspection head at the end of the articulated robot. This is made possible by improved laser sources and/or the use of remote laser sources which are fiber-coupled to laser beam delivery heads for both the generation and detection laser beams within the ultrasound inspection head. This provides a significant advantage in that articulated robots may be used to inspect areas within assembled structures previously inaccessible to gantry robots.

The present invention provides a robotic composite inspection system operable to generate ultrasonic surface displacements on a surface of a remote target. This large area composite inspection system may be part of a large industrial robotic gantry based inspection system and use diode pumped fiber lasers to produce generation and/or detection laser beams and in so doing allow more compact robots and inspection systems to be built.

Embodiments and aspects of the present invention are recited by the appended claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:

FIG. 1 depicts an articulated robot used to position an ultrasound inspection head relative to target materials in accordance with an embodiment of the present invention;

FIG. 2 illustrates the use of generation laser beam and a.detection laser beam to generate and detect laser ultrasonic displacements in accordance with an embodiment of the present invention;

FIG. 3 provides a block diagram to show the basic components of laser ultrasound system;

FIG. 4 provides a functional diagram of one embodiment of an ultrasound inspection head in accordance with embodiments of the present invention;

FIG. 5 provides a functional diagram of one embodiment of an ultrasound inspection head that utilizes distributed resources in accordance with embodiments of the present invention;

FIG. 6 depicts the articulated robot articulated in multiple positions that facilitate NDE of materials in accordance with embodiments of the present invention;;

FIG. 7 shows an articulated robot mounted on a rail where the rail allows for controlled movement of the articulated robot and laser ultrasound head within a predetermined work envelope n accordance with embodiments of the present invention;

FIG. 8 shows an articulated robot articulated within an assembled structure such as an aircraft fuselage where the articulation allows for controlled movement of the articulated robot and laser ultrasound head within a confined space in accordance with embodiments of the present invention;

FIG. 9 depicts an in service application of the ultrasound NDE system provided by embodiments of the present invention; and

FIG. 10 depicts a mobile application of the ultrasound NDE system provided by embodiments of the present invention.

### DETAILED DESCRIPTION OF THE INVENTION

Preferred embodiments of the present invention are illustrated in the FIGURES, like numerals being used to refer to like and corresponding parts of the various drawings.

Laser-ultrasonic inspection has been demonstrated as a cost effective tool for the non-destructive evaluation (NDE) of polymer-matrix composites. As these composites are increasingly used in different industries, the quantity and complexity of composite parts are increasing. Also, the installed base of composites is increasing as well. As the size and complexity of objects fabricated from composites increase, it becomes more and more difficult to position the laser-ultrasonic sensors relative to the surface to be inspected. Embodiments of the invention disclosed here propose a solution to this problem.

The embodiment according to the invention places the laser-ultrasonic sensor at the end of an articulated robot (i.e. laser ultrasonic head). Laser-ultrasonic inspections are usually carried out by moving the laser ultrasonic sensor using a gantry positioning system that moves along a Cartesian (X-Y-Z) system.

Articulated robots have been used in several industries. Articulated robots provide several advantages when compared to gantry systems if the size and weight of the laser ultrasound head can be reduced.. Also articulated robots offer more flexibility in the deployment. Articulated robots can be installed and displaced more easily than gantry systems. Furthermore articulated robots offer position registration not available with many mobile (i.e. cart based) systems. Articulated robots impose fewer constraints than gantry systems relatively to the room size and facility requirements. Articulated robots also offer the ability to position the laser-ultrasonic sensor within complex or assembled parts.

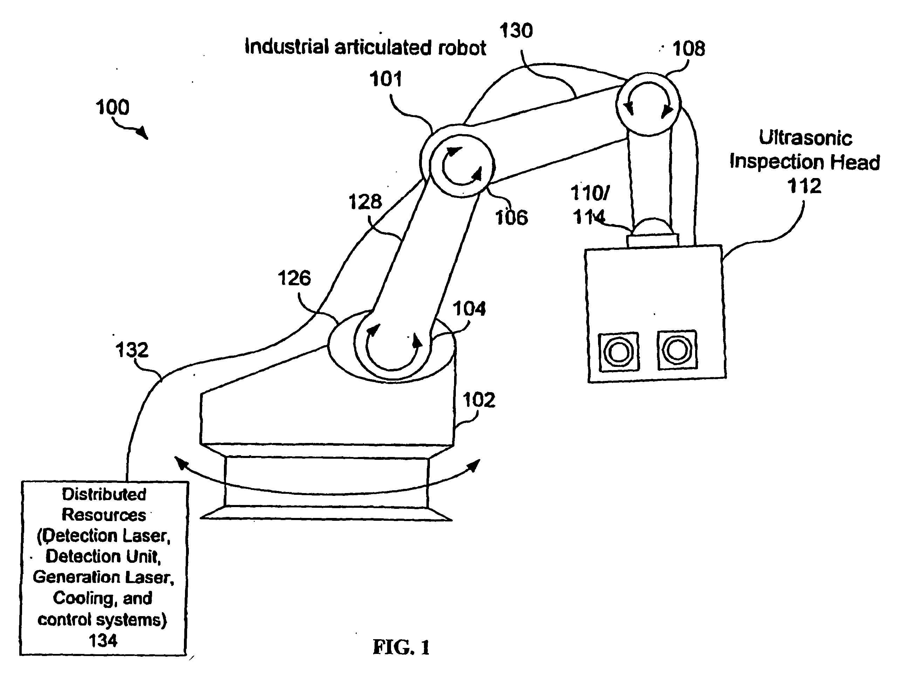

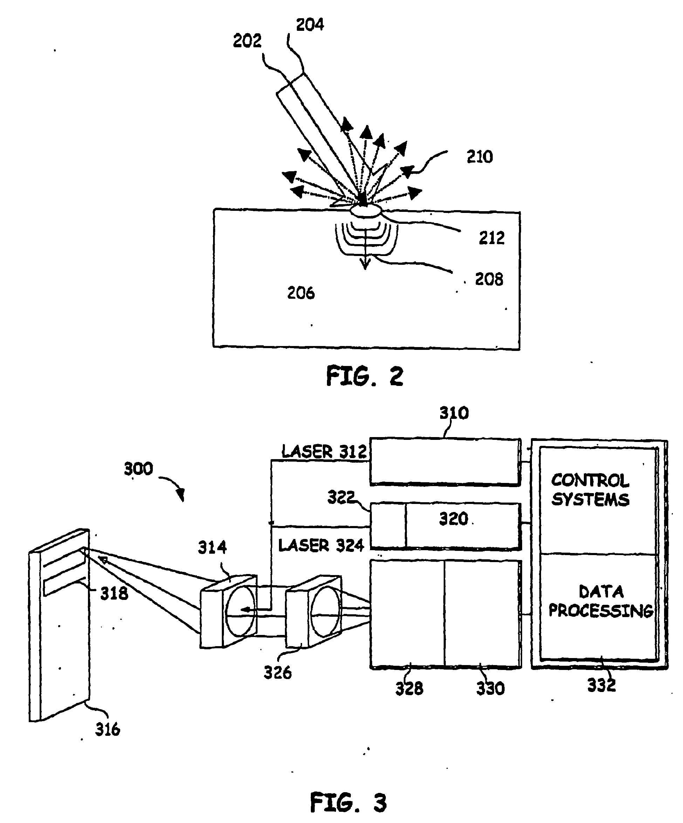

Robotic technology provides a low risk approach to automation compared to dedicated special purpose equipment. As is shown in FIG. 1, an articulated Robot 101 is provided in an ultrasonic non-destructive evaluation (NDE) system 100. System 100 includes the articulated robot 101, distributed resources 134 and ultrasound inspection head 112. Articulated robot 101 as shown in this embodiment may use a number of joints (i.e. rotary joints) to provide a number of independent motions (to support a number of degrees of freedom) in which the end effector or manipulator can be repositioned. Typically, industrial' articulated robots have six degrees of freedom but might have more or less in some circumstances. Articulated robot 101 includes a platform mount 102, a first rotary joint 104, second rotary joint 106, third rotary joint 108, a fourth rotary joint 110, and end effector or manipulator 114, shoulder 126, a first arm 128, and second arm 130. Joints 104, 106, 108 and 110 may be arranged in a "chain" so that one joint supports another further in the chain. Ultrasound inspection head 112 is coupled to articulated.robot 101 with the manipulator or end effector 124. Additionally the ultrasound inspection head 112 may be coupled to distributed resources 134 through various cables 132. Distributed resources 134 can be completely located on the ground, as illustrated in Fig. 1, or can be distributed at different locations on the robot. For example, not illustrated here, resources for the generation laser could be located on the ground and some other resources of the generation laser could be located on one arm of the robot like arm 128 or 130, or both. Final delivery optics for the generation laser would still be located in the ultrasound inspection head 112. Ultrasound inspection head 112 may deliver a generation laser beam and detection laser beam such as those discussed with reference to FIG. 2 and FIG. 3 to target materials. FIG. 1 shows the articulated robot in an upward orientation on the ground. In a similar embodiment not illustrated here, the robot would be attached to the ceiling in an downward orientation. The robot could also be attached to a gantry robot, giving the maximum flexibility for positioning the robot. In that embodiment, not illustrated here, the distributed resources 134 could be located on any section of the articulated robot, on any section of the gantry robot, or on the ground.

FIG. 2 depicts two incoming laser beams that generate and detect laser ultrasonic displacements as provided by embodiments of the present invention. Laser beam 202 generates ultrasound while illumination (detection) laser beam 204 detects the ultrasound at a remote target 206, such as a composite material under test. As shown, these lasers may be coaxially applied to remote target 206. Generation laser beam 202 causes thermo-elastic expansion 212 in target 206 that results in the formation of ultrasonic deformations or waves 208. Deformations or ultrasonic waves 208 propagate in target 206 and modulate, scatter and reflect illumination laser beam 204 to produce phase-modulated light 210 directed away from target 206 which is collected and processed to obtain information describing the internal structure of remote target 206. For purposes of this disclosure phase modulation also includes frequency modulation. The time derivative of a phase modulation corresponds to the frequency modulation. Since the term modulation in the present context means variation as a function of time, any phase modulation corresponds to a frequency modulation.

FIG. 3 provides a block diagram with the basic components for performing ultrasonic laser testing. Generation laser 310 produces generation laser beam 312 which optical assembly 314 directs to target 316. As shown, optical assembly 314 includes a scanner or other like mechanism that moves laser beam 312 along a scan or test plan 318. Optical assembly 314 may include visual cameras, depth cameras, range detectors, narrowband cameras or other like optical sensors know to those having skill in the art. These optical sensors each may require calibrations prior to performing an inspection. This calibration verifies the ability of the system to integrate information gathered by various sensors. Generation laser 310 produces an ultrasonic wave 208 within target 316.

Ultrasonic wave 208 is the result of thermo-elastic expansion 212 of the composite material as the composite material absorbs the generation laser beam. Composite materials readily absorbs generation laser beam 312 without ablating or breaking down. Higher powered generation lasers are not necessarily preferred to overcome signal-to-noise ratio (SNR) issues as these can result in ablation of material at the surface of the workpiece, potentially damaging the component. In other embodiments, depending on the material being tested, some ablation may be acceptable in order to increase the SNR of the detected signal. Generation laser beam 312 has appropriate pulse duration, power, and frequency to induce ultrasonic surface deformations. For example, a transverse-excited atmospheric (TEA) CO₂ laser can produce a 10.6 micron wavelength beam for a 100 nanosecond pulse width. The power of the laser must be sufficient to deliver a 0.25 joule pulse to the target, which may require a 100 watt laser operating at a 400 Hz pulse repetition rate. Generation laser beam 312 is absorbed as heat into the target surface thereby causing thermo-elastic expansion without ablation.

Illumination or detection laser 320 operating in pulsed mode or CW mode does not induce ultrasonic displacements. For example, an Nd:YAG laser can be used. The power of this laser must be sufficient to deliver, for example, a 100 milli-joule, 100 micro-second pulse, which may require a one kilo-watt (KW) laser. Illumination (detection) laser 320 generates detection laser beam 322. Illumination laser 320 includes or optically couples to filtering mechanism 324 to remove noise from detection laser beam 324. Optical assembly 314 directs illumination laser beam 324 to the surface of composite material 316 which scatters and/or reflects detection laser beam 324. Resultant phase modulated light is collected by collection optics 326. As shown here, scattered and/or reflected detection laser light travels back through optical assembly 314. Optional optical processor 328 and interferometer 330 process the phase modulated light to produce a signal containing information representative of the ultrasonic displacements at the surface of composite material 316. Data processing and control system 332 coordinates operation of the laser ultrasound system components. Data processing and control system 332 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions stored in memory. The memory may be a single memory device or a plurality of memory devices. Such a memory device may be a read-only memory, random access memory, volatile memory, non-volatile memory, static memory, dynamic memory, flash memory, cache memory, and/or any device that stores digital information, The memory stores, and data processing and control system 332 executes, operational instructions corresponding to at least some of the steps and/or functions as will be illustrated.

The ultrasound inspection head 112 of FIG. 1 may collect phase modulated light scattered by the target materials. Depending on the capabilities of the ultrasound inspection head, the ultrasound inspection head may include a processing module operable to process the collective phase modulated light and produce information about the internal structure of the target materials. Alternatively the generation of laser beams and processing of detected optical signals may be handled with distributed resources 114. Distributed resources 114 may include a generation laser source 316, a detection unit 318, generation laser source 322 and processing and control module 320.

Embodiments of the present invention utilize fiber lasers within the ultrasound NDE system. Fiber laser technology may be combined with and applied to the generation and detection laser. A fiber laser detection laser is disclosed in U.S. Patent Application No. 11/458,377, entitled "FIBER LASER FOR ULTRASONIC TESTING" filed on July 18, 2006. A fiber-laser-based. generation laser is disclosed in U.S. Patent Application No. 11/524,046, entitled "FIBER-BASED MID-INFRARED GENERATION LASER FOR LASER ULTRASOUND" filed on September 9, 2006.

The primary task of a "first" detection laser is to illuminate the spot where a "second" laser is used to generate ultrasound in the part under test. The scattered light from the first laser is collected and analyzed with an interferometer to demodulate the surface vibrations caused by the return echoes of the ultrasound at the surface of the part. The detection laser (first laser) and generation laser (second laser) may use diode pumped fiber lasers to produce a high power output.

Gas lasers able to reliably operate at repetition rates above 1000 Hz would be very heavy and bulky. Another limitation of the gas lasers is the requirement of maintenance every one to three billion shots to change parts and to clean the optics.

An all-fiber pump laser scheme may be employed by the present invention and use many small continuous wave (CW) diode lasers ('pump diodes') to pump the doped active laser fiber. This has several advantages. First of all, these low power diodes offer the very high reliability required for telecom applications and have mean time between failure (MTBF) ratings of 100,000 hours. Also, all of the fiber-coupled pump diodes are relatively small in power (typically only a few watts) and the failure of any one would have little impact on the total performance of the fiber laser. Furthermore reduced weight would reduce mechanical requirements of the articulated robot and or could be partially positioned within the distributed resources.

Thermal management of a fiber laser/amplifier is more easily handled than within a traditional bulk crystal gain medium. Heat removal from the fiber-coupled pump diodes is managed separately from the gain medium (the doped active laser fiber), and the ratio of the fiber surface area (where heat is extracted) to the volume is many orders-of-magnitude larger than the surface-to-volume ratio for a rod or slab laser architecture. As a result, a fiber laser can be operated in a fundamental (TEM00) transverse mode with very little wavefront distortion (M^2 < 1.2). Fiber lasers do not use traditional discrete or bulk optics such as mirrors or lenses. Therefore contamination issues within the laser cavity are eliminated. This is particularly advantageous for industrial inspection systems that run around the clock in production' applications. A fiber laser looks like a piece of industrial electronics. Flexible architecture enables mobile and possibly portable laser ultrasonic inspection equipment designs. Overall, fiber lasers are well suited for harsh industrial environments.

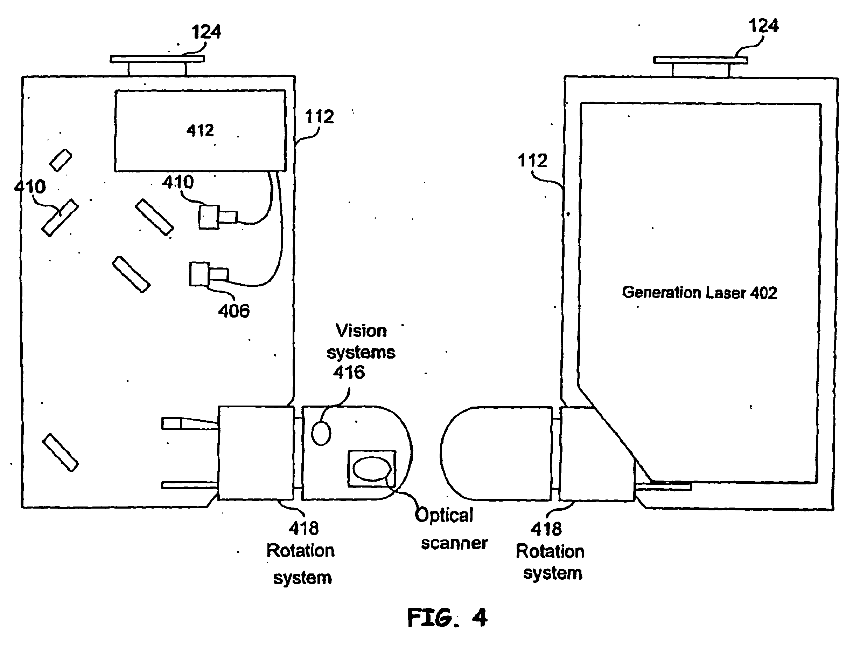

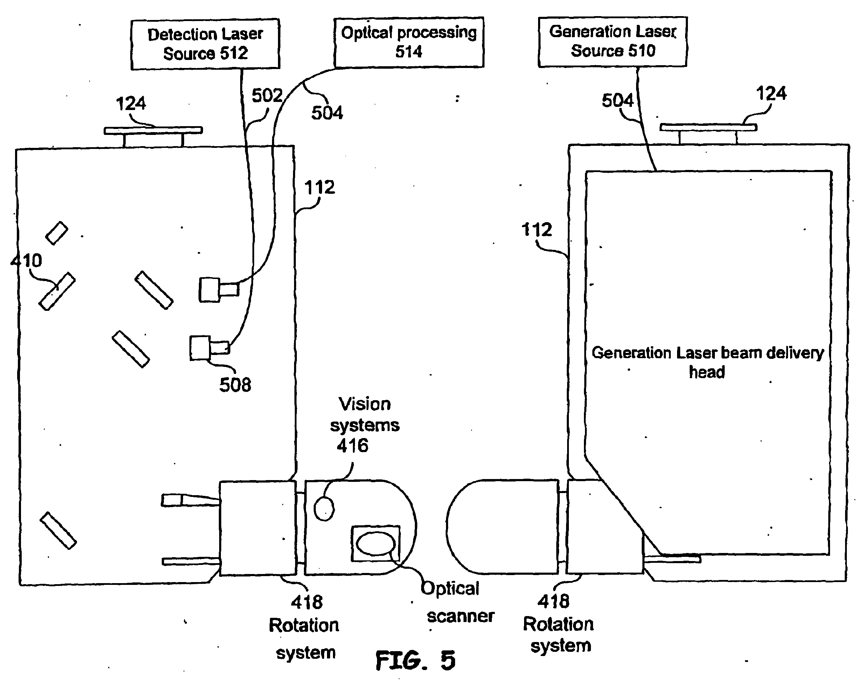

FIG. 4 provides a functional diagram of one embodiment of an ultrasound inspection head 112 in accordance with embodiments of the present invention. In one embodiment in generation lasers 402 may be provided to produce generation laser beam 202 which is then directed to the target materials. Similarly a detection laser 406 may be used to produce a detection laser beam 204 also directed to the target materials. Collection optics 410 may be used to collect phase modulated light scattered by the remote target. This phase modulated light is then processed using an optical detection and processing unit 412. Vision system 416 and its associated processors may then determine the position and orientation of the target materials relative to the ultrasound inspection head. Fig. 5 shows a rotation system 41B that might facilitate the positioning of the optical scanner relative to the part to be inspected. To reduce the size of the ultrasound inspection head, the rotation system 418 can be absent from the ultrasonic inspection head (not illustrated here). In this latter embodiment, the positioning of the ultrasonic head to inspect a part is entirely completed by the various degrees of freedom of the articulated robot. Due to weight concerns and economic concerns some of these modules (such as the laser sources) associated with the generation laser, detection laser, and required processing moved from the ultrasound inspection head in order to reduce the weight of the ultrasound inspection head and the mechanical requirements of the.articulated robot.

Such an embodiment is shown in FIG. 5 where optical fibers 502, 504 and 506 may be used to couple the detection laser source and generation laser source to the detection laser head 508, generation laser head 510, and optical processor 514 respectively. Here the generation laser source and detection laser source 512 are remotely located as part of distributed resources as shown in FIG 4. Optical fiber 504 may be used to provide collected phase modulated light to an optical processing system 514 within the detection unit 128 of FIG. 1. Removing these resources from the ultrasound inspection head reduces the overall size and weight requirements of the articulated robot. This potentially results in not only lower costs but increased flexibility and capability of the robot. The detection laser source 512 and generation laser source 510 can be distributed on various arms of the robot or completely off the robot.

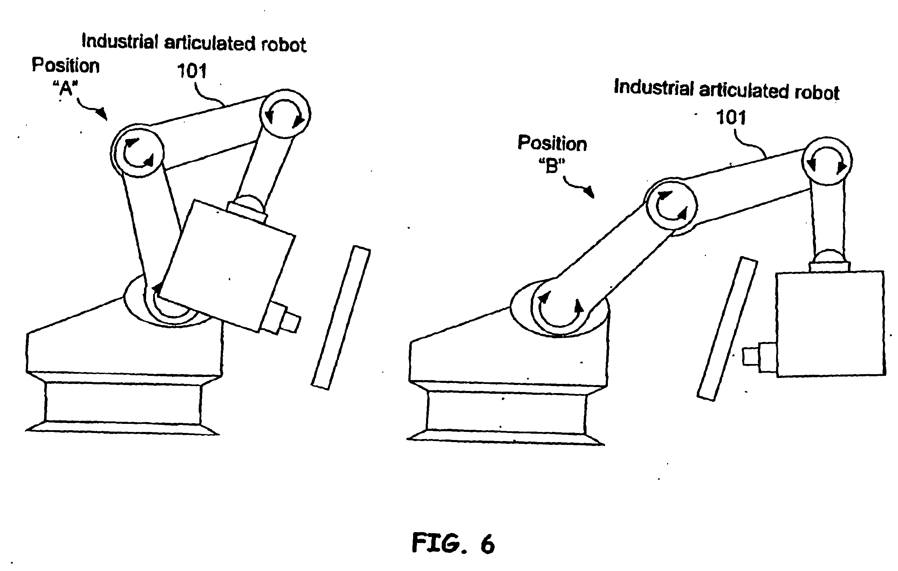

FIG. 6 depicts the articulated robot 101 articulated in position "A" and position "B". These different positions of the robot allow the laser ultrasound head 112 to be placed in different positions while attempt to the target materials in order to completely cover and fully inspect the target materials.

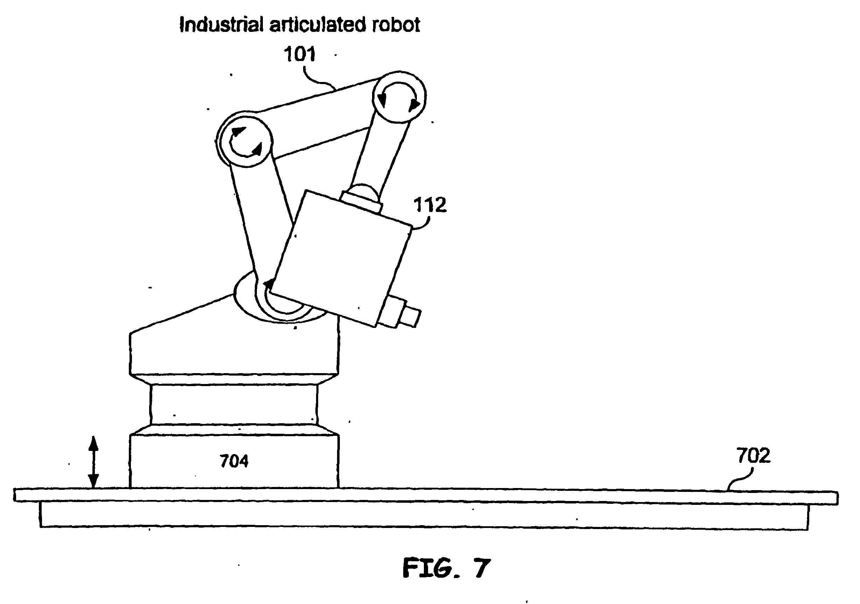

FIG. 7 shows that articulated robot 101 may be mounted on a rail 702 where rail 702 allows for controlled movement of the articulated robot and laser ultrasound head 112 within a predetermined work envelope. The work envelope defines the boundaries within which the articulated robot 101 can reach to position a laser ultrasound head 112. Rail 702 is not necessarily straight and can take a semi-circular, circular, or any shape necessary to fit the required work envelope. Additionally platform 704 may translate along a Z axis in order to help elevate or lower laser ultrasound head 112 in order to fully reach and inspect the target materials. Platform 704 can be present even in the case where the rail 702 would not be present.

In a similar embodiment not illustrated here, the articulated robot could be on a rail system that would move the articulated in two dimensions (X-Y). The platform 704 might or might not be present to provide additional positioning capabilities in the Z direction. In another similar embodiment not illustrated here, the rail system and platform 704 could be replaced by a gantry robot, and the articulated robot would be attached in a downward orientation to this gantry robot that would provide the additional positioning capabilities in three dimensions (X-Y-Z).

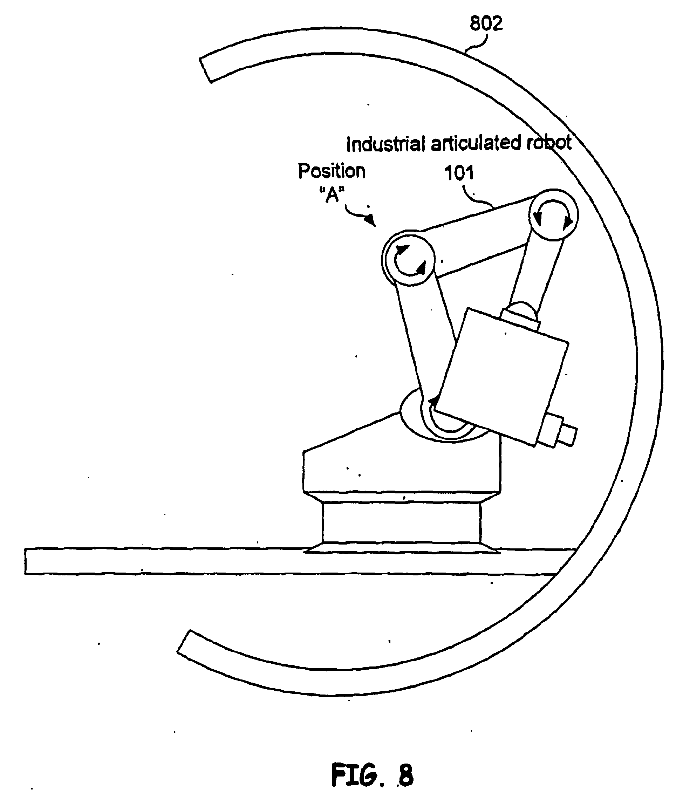

An important advantage is illustrated in Fig. 8. FIG. 8 depicts an articulated robot 101 having ultrasound inspection head 112 that may be positioned within a completed or integrated structure that contains internal surfaces to be inspected. FIG. 8 depicts that the articulated robot may either fully or partially enter a completed structure 802 such as an aircraft fuselage. This aircraft fuselage may be made of individual components fabricated from composite materials that require inspection. Thus not only the fabrication of the part may be inspected, but also the completed structure. This allows the inspection process to identify potential problems during assembly or once the structure is in service.

Robot 101 may be mounted on a rail 702 in order to facilitate the movement of the ultrasound inspection head 312 without requiring motion of the completed structure 802. The work envelope associated with the articulated robot may define boundaries such that the articulated robot may fully inspect but not collide with integrated structure 802. The vision system discussed with reference to FIGs. 4 and 5 or other like position detection systems (i.e. laser-based, radar-based or acoustic-based) may be used to prevent collisions and to determine the orientation and position of the target materials (including assembled structures) relative to the ultrasound laser head and articulated robot.

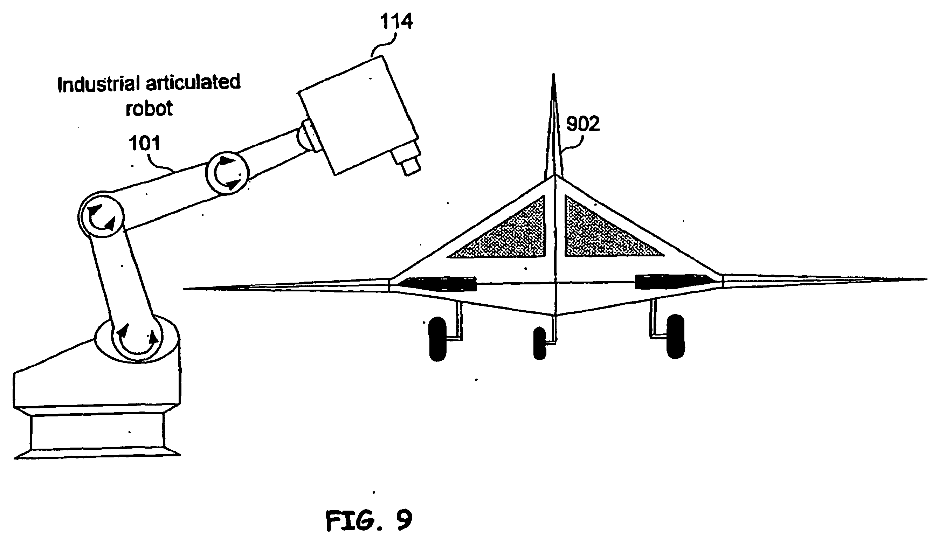

FIG. 9 depicts an in-service application of the ultrasound NDE system provided by embodiments of the present invention. In this embodiment articulated robot 101 and laser ultrasound inspection head 112 may be mounted in a service location such as a hanger in order to facilitate the inspection of integrated structures, such as but not limited to aircraft 902. Aircraft 902 may have many components constructed or fabricated from composite materials where in service inspection allows the structural integrity of the composite materials to be evaluated without requiring disassembly of the aircraft.

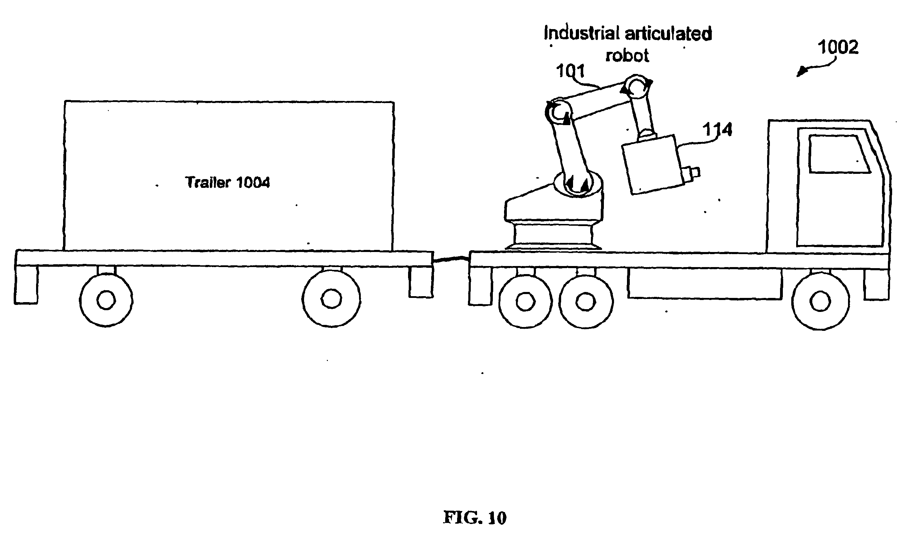

FIG. 10 depicts another in-service application wherein the articulated robot 101 may be mounted to a mobile platform 1002. Trailer 1004 couples to mobile platform 1002. Trailer 1004 may house distributed resources required by the NDE system. In this instance the ultrasound NDE system may be brought to an integrated structure to be inspected. This differs from FIG. 9 where an in-service system used to inspect an integrated system which brought to the inspection system. Either embodiment provides increased flexibility in performing in-service inspections. In addition, the embodiment illustrated by Fig. 10 can present several advantages for the ultrasonic inspection of composite parts in a manufacturing environment. For example, part handling can be minimized by bringing the inspection system to the manufactured part especially when that part is very large, like a composite fuselage. Minimizing part handling decreases the possibilities of damaging the part during manufacturing. An additional advantage of the mobile platform 1002 in a manufacturing environment is that the inspection system can be moved out of the way when required. Finally, the inspection resources can be moved at different locations in the plant as required by modifications to the production line.

Locating the pump laser head meters away from generation laser beam delivery head allows a compact mid-IR generation laser head since the overall payload and the stability requirement for robotic systems used to deliver the generation laser beam are significantly relaxed. Only a compact and lightweight module containing the generation laser beam delivery head, detection laser beam delivery head and collection optics is required to be mounted within the inspection head of the robotic system. This allows the deployment of a mid-IR laser source using smaller articulated robots. Thus, new composite inspection opportunities are created for in-service composite NDE using portable laser ultrasound systems.

In operation the present invention allows laser ultrasonic test equipment to be used in a wider range of environments while testing more complex surfaces or surfaces within limited access areas. The embodiments of the present invention may utilize fiber lasers or distributed resources to generate and deliver detection and generation laser beams to target materials to be tested. Doing so allows the overall size of a laser ultrasound based NDE system to be greatly reduced. For example, instead of a large gantry robotic based system, a much smaller articulated robotic system may be used to deliver generation and detection laser beams to, and collect phase modulated light from the surface of the target to be tested. This allows the laser ultrasound inspection system offered by embodiments of the present invention to be used to not only inspect individual components but to assess the internal structure of integrated components. Thus, not only can individual parts be inspected by the laser ultrasound system offered by embodiments of the present invention but assembled structures made from individual parts.may be inspected. This allows inspections to be made after the integrated structure has been built to determine if changes in the internal structure over the life of the structure have occurred. Additionally, embodiments of the present invention may provide an entirely mobile system that uses fiber lasers to generate and detect ultrasonic displacements at a remote target in the field without the problems often associated with free space delivery of generation and detection laser beam(s).

As one of average skill in the art will appreciate, the term "substantially" or "approximately", as may be used herein, provides an industry-accepted tolerance to its corresponding term. Such an industry-accepted tolerance ranges from less than one percent to twenty percent and corresponds to, but is not limited to, component values, integrated circuit process variations, temperature variations, rise and fall times, and/or thermal noise. As one of average skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of average skill in the art will also appreciate, inferred coupling (i.e., where one element is coupled to another element by inference) includes direct and indirect coupling between two elements in the same manner as "operably coupled". As one of average skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

Although the present invention has been described in detail, it should be understood that various changes, substitutions and alterations can be made hereto without departing from the scope of the invention as defined by the appended claims.

## Claims

1. An ultrasonic non-destructive evaluation (NDE) system (100) operable to inspect target composite materials, the system comprising:
an articulated robot (101) having an arm with a number of rotary joints (106, 108), the robot being operably mounted on a platform (102);
an ultrasound inspection head (112) coupled to an end effector of the arm of the articulated robot (101), the ultrasound inspection head (112) operable to:
deliver a generation laser beam by a generation laser head (112) to the composite materials wherein the generation laser beam produces ultrasonic displacements at the target materials;
deliver a detection laser beam by a detection laser head (508) to the target materials; and
collect phase modulated light scattered by the target materials by collection optics;
a generation laser source (510) remotely located from the inspection head (112);
a detection laser source (512) remotely located from the inspection head (112);
a positioning system operable to determine a position of the target materials relative to the ultrasound inspection head (112);
a processing module (514) remotely located from the inspection head (112) and coupled to the collection optics by an optical fiber (504), the processing module (514) being operable to process the phase modulated light and produce information about the internal structure of the target materials; and
a control module operable to direct the articulated robot to position the ultrasound inspection head (112) according to a scan plan; wherein:
the generation laser head is coupled to the generation laser source (510) by an optical fiber (504); and
the detection laser head (508) is coupled to the detection laser source (512) by an optical fiber (502), **characterized in that** the generation laser source (510) is a fiber-laser generation laser source (510), the detection laser source (512) is a fiber-laser detection laser source (512), and the generation laser beam is a pulsed generation laser beam and each pulse is a 0.25 Joule pulse.

2. The ultrasonic NDE system (100) of Claim 1, wherein the platform (102) is operable to reposition in an x, y, and z direction.

3. The ultrasonic NDE system (100) of Claim 1, wherein the platform (102) translates along a rail relative to the target materials.

4. The ultrasonic NDE system of Claim 1, wherein the platform (102) comprises a vehicle operable to reposition the platform relative to the target materials.

5. The ultrasonic NDE system (100) of Claim 1, further comprising:
an optical processor operable to:
optically process the phase modulated light to produce a detected signal; and
provide the detected signal to the processing module.

6. The ultrasonic NDE system (100) of Claim 1, wherein the generation laser source (510), detection laser source (512) and platform (102) are contained within a mobile transport system.

7. The ultrasonic NDE system (100) of Claim 1, wherein the positioning system comprises a vision system operable to determine a position and orientation of the target materials relative to the ultrasound inspection head (112).

## Patentansprüche

1. Zerstörungsfreies Ultraschall-Auswertungssystem (NDE) (100), das dazu funktionsfähig ist, Zielverbundmaterialien zu inspizieren, wobei das System umfasst:
einen Gelenkarmroboter (101), der einen Arm mit einer Anzahl Drehgelenke (106, 108) aufweist, wobei der Roboter funktionsfähig auf einer Plattform (102) montiert ist;
einen Ultraschall-Inspektionskopf (112), der an ein Greiforgan des Arms des Gelenkarmroboters (101) gekoppelt ist, wobei der Ultraschall-Inspektionskopf (112) dazu funktionsfähig ist,
den Verbundmaterialien einen Erzeugungslaserstrahl durch einen Erzeugungslaserkopf (112) zuzuführen, wobei der Erzeugungslaserstrahl Ultraschallversetzungen an den Zielmaterialien erzeugt;
den Zielmaterialien einen Erfassungslaserstrahl durch einen Erfassungslaserkopf (508) zuzuführen; und
phasenmoduliertes Licht zu sammeln, das von den Zielmaterialien durch eine Sammeloptik zerstreut wird;
eine Erfassungslaserquelle (510), die sich von dem Inspektionskopf (112) entfernt befindet;
eine Erfassungslaserquelle (512), die sich von dem Inspektionskopf (112) entfernt befindet;
ein Positionierungssystem, das dazu funktionsfähig ist, eine Position der Zielmaterialien relativ zum Ultraschall-Inspektionskopf (112) zu bestimmen;
ein Verarbeitungsmodul (514), das sich vom Inspektionskopf (112) entfernt befindet und an die Sammeloptik durch eine optische Faser (504) gekoppelt ist, wobei das Verarbeitungsmodul (514) dazu funktionsfähig ist, das phasenmodulierte Licht zu verarbeiten und Information über den inneren Aufbau der Zielmaterialen zu erzeugen; und
ein Steuermodul, das dazu funktionsfähig ist, den Gelenkarmroboter anzuleiten, den Ultraschall-Inspektionskopf (112) gemäß einem Abtastplan zu positionieren; wobei:
der Erzeugungslaserkopf durch eine optische Faser (504) an die Erzeugungslaserquelle (510) gekoppelt ist; und
der Erfassungslaserkopf (508) an die Erfassungslaserquelle (512) durch eine optische Faser (502) gekoppelt ist, **dadurch gekennzeichnet, dass** die Erzeugungslaserquelle (510) eine Faserlaser-Erzeugungslaserquelle (510) ist, die Erfassungslaserquelle (512) eine Faserlaser-Erfassungslaserquelle (512) ist und der Erzeugungslaserstrahl ein gepulster Erzeugungslaserstrahl ist und jeder Impuls ein Impuls von 0,25 Joule ist.

2. Ultraschall-NDE-System (100) nach Anspruch 1, wobei die Plattform (102) dazu funktionsfähig ist, sich in einer x-, y- und z-Richtung neu zu positionieren.

3. Ultraschall-NDE-System (100) nach Anspruch 1, wobei die Plattform (102) entlang einer Schiene relativ zu den Zielmaterialien übersetzt.

4. Ultraschall-NDE-System nach Anspruch 1, wobei die Plattform (102) ein Fahrzeug umfasst, das dazu funktionsfähig ist, die Plattform relativ zu den Zielmaterialien neu zu positionieren.

5. Ultraschall-NDE-System (100) nach Anspruch 1, ferner umfassend:
einen optischen Prozessor, der dazu funktionsfähig ist,
das phasenmodulierte Licht optisch zu verarbeiten, um ein erfasstes Signal zu erzeugen; und
das erfasste Signal an das Verarbeitungsmodul zu liefern.

6. Ultraschall-NDE-System (100) nach Anspruch 1, wobei die Erzeugungslaserquelle (510), Erfassungslaserquelle (512) und Plattform (102) in einem mobilen Transportsystem enthalten sind.

7. Ultraschall-NDE-System (100) nach Anspruch 1, wobei das Positionierungssystem ein Visionssystem umfasst, das dazu funktionsfähig ist, eine Position und Ausrichtung der Zielmaterialien relativ zum Ultraschall-Inspektionskopf (112) zu bestimmen.

## Revendications

1. Système d'évaluation non destructive (NDE) ultrasonore (100) servant à inspecter des matériaux composites cibles, le système comprenant :
un robot articulé (101) comportant un bras avec un certain nombre de joints rotatifs (106, 108), le robot étant monté de manière fonctionnelle sur une plateforme (102) ;
une tête d'inspection ultrasonore (112) raccordée à un organe terminal effecteur du bras du robot articulé (101), la tête d'inspection ultrasonore (112) servant à :
délivrer un faisceau laser de génération émis par une tête laser de génération (112) aux matériaux composites, le faisceau laser de génération produisant des déplacements ultrasonores sur les matériaux cibles ;
délivrer un faisceau laser de détection émis par une tête laser de détection (508) aux matériaux cibles ; et
collecter la lumière à modulation de phase diffusée par les matériaux cibles par des optiques collectrices ;
une source laser de génération (510) située à distance de la tête d'inspection (112) ;
une source laser de détection (512) située à distance de la tête d'inspection (112) ;
un système de positionnement servant à déterminer une position des matériaux cibles par rapport à la tête d'inspection ultrasonore (112) ;
un module de traitement (514) situé à distance de la tête d'inspection (112) et raccordé aux optiques collectrices par une fibre optique (504), le module de traitement (514) servant à traiter la lumière à modulation de phase et à produire des informations sur la structure interne des matériaux cibles ; et
un module de commande servant à diriger le robot articulé afin de positionner la tête d'inspection ultrasonore (112) selon un plan de balayage ;
la tête laser de génération étant raccordée à la source laser de génération (510) par une fibre optique (504) ; et
la tête laser de détection (508) étant raccordée à la source laser de détection (512) par une fibre optique (502) ; **caractérisé en ce que** la source laser de génération (510) est une source laser de génération laser à fibre (510), la source laser de détection (512) est une source laser de détection laser à fibre (512), et le faisceau laser de génération est un faisceau laser de génération à impulsions, chaque impulsion étant une impulsion de 0,25 Joule.

2. Système NDE ultrasonore (100) selon la revendication 1, dans lequel la plateforme (102) est capable de se repositionner dans une direction x, y et z.

3. Système NDE ultrasonore (100) selon la revendication 1, dans lequel la plateforme (102) se déplace longitudinalement suivant un rail par rapport aux matériaux cibles.

4. Système NDE ultrasonore selon la revendication 1, dans lequel la plateforme (102) comprend un véhicule servant à repositionner la plateforme par rapport aux matériaux cibles.

5. Système NDE ultrasonore (100) selon la revendication 1, comprenant en outre :
un processeur optique servant à :
traiter optiquement la lumière à modulation de phase afin de produire un signal détecté, et fournir le signal détecté au module de traitement.

6. Système NDE ultrasonore (100) selon la revendication 1, dans lequel la source laser de génération (510), la source laser de détection (512) et la plateforme (102) sont contenues dans un système de transport mobile.

7. Système NDE ultrasonore (100) selon la revendication 1, dans lequel le système de positionnement comprend un système de vision servant à déterminer une position et une orientation des matériaux cibles par rapport à la tête d'inspection ultrasonore (112).
